Europäisches Patentamt

European Patent Office

Office européen des brevets

(11) Publication number: **0 048 540**
**B1**

(12) EUROPEAN PATENT SPECIFICATION

(45) Date of publication of patent specification: **04.02.87**

(51) Int. Cl.⁴: **C 08 J 5/18,** B 29 C 55/12

(21) Application number: **81302680.4**

(22) Date of filing: **16.06.81**

(54) Biaxially-oriented methylstyrene polymer films and method for their manufacture.

(30) Priority: **24.09.80 US 190535**

(43) Date of publication of application:
**31.03.82 Bulletin 82/13**

(45) Publication of the grant of the patent:
**04.02.87 Bulletin 87/06**

(84) Designated Contracting States:
**BE DE FR GB IT NL**

(56) References cited:
**EP-A-0 013 139**
**FR-A-2 249 111**

The file contains technical information
submitted after the application was filed and
not included in this specification

(73) Proprietor: **MOBIL OIL CORPORATION**
**150 East 42nd Street**
**New York New York 10017 (US)**

(72) Inventor: **Ong, S. Christine**
**541 Wren Way**
**Sommerville New Jersey (US)**
Inventor: **Bright, Margaret Newton**
**5 Walnut Street**
**Jamesburg New Jersey (US)**

(74) Representative: **Cooper, John Anthony et al**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to biaxially-oriented films of methylstyrene polymers and a method for their manufacture.

It is well known that styrene homopolymers and copolymers are useful in making low-cost films and sheet products. Biaxially-oriented polystyrene is known and described in U.S. Patents 2,997,743, 3,619,455, and 4,011,357. Alkyl-substituted styrenes are well known monomers for addition polymerization, especially α-methylstyrene and various mixed isomers of ring-substituted methylstyrene. These mixed isomers are usually a reaction product of ethyltoluene which has been dehydrogenated to obtain a mixture rich in para and ortho isomers.

Various copolymers of acrylonitrile containing a minor amount of styrene or other comonomers, such as 4-methylstyrene, are described in U.S. Patent 4,039,734 as being suitable for making biaxially-oriented films. Also the uncharacterized vinyl-toluene monomers, usually a mixture of isomers, containing predominantly ortho and meta compounds, are known as copolymeric materials, for instance as hot drawn film disclosed in U.S. Patent 3,322,855. Films of poly(p-methylstyrene) are described in EP—A—0013139 and FR—A—2249111 discloses biaxially oriented films which essentially consist of a vinylaromatic polymer.

Molecular orientation of thermoplastic resins can be achieved by stretching a polymeric sheet, usually by 2 to 8 times its original linear dimension. This stretching operation can be performed uniaxially or biaxially by several techniques, for example by sequentially stretching a continuous strip in the machine and transverse directions, as taught in U.S. Patent 2,695,420.

The present invention is based on the observation that a polymer film containing a large proportion of p-methylstyrene can be oriented to obtain valuable products having superior elastic modulus and dimensional stability properties.

Accordingly, the present invention provides a biaxially-oriented film of a methylstyrene polymer at least 90% of the repeating units of which are derived from p-methylstyrene.

The material of the invention may be formed by conventional methods of producing solid, oriented films, in which the molten polymer is formed into a thin sheet and oriented by hot stretching at above its glass transition temperature. According to the present invention, the film comprises a thermoplastic high polymer consisting essentially of poly(p-methylstyrene), preferably containing less than 5% meta-methylstyrene units and substantially free of ortho-methylstyrene units, for example less than 0.1%, and the polymer suitably has a glass transition temperature above 100°C.

While this invention is directed primarily towards homopolymeric poly(p-methylstyrene) (PPMS), minor amounts of one or more other ethylenically unsaturated compounds may be copolymerized with the p-methylstyrene without deleterious effects on the properties of the film. Thus, in addition to the incorporation of other methylstyrene isomers, for example m-methylstyrene as a 65:35 meta:para mixture, for example, α-methylstyrene and other monoethylenically unsaturated hydrocarbons of low molecular weight may be incorporated by addition polymerization. Technical grade para-methylstyrene is typically 95—97 weight percent pure, with up to 5% of other isomers, especially meta. Poly-substituted benzenoids having alkyl, halogen or other moieties may be employed in minor amounts, as may lower alkyl acrylic and methacrylic esters, $C_2$ to $C_8$ mono-olefins, acrylonitrile, dienes and substituted styrenes. However, the use of multi-functional comonomers which produce excessive cross-linking should be minimized, or they should be omitted completely to ensure that thermoplastic and working properties are undiminished.

The polymers useful herein include a wide range of molecular weight maetrials, for example from 50,000 to 500,000 or more, having melt index values of about 0.1 to 10. Conventional free radical-initiated polymerization process may be employed in synthesizing the polymers.

Various fillers, dyes, optical brighteners, stabilizers, pigments, slip agents, pore-forming materials, plasticizers, anti-stats, and other additives may be incorporated into the polymeric material.

The oriented films of this invention are useful as packaging materials and have heat-seal properties which render them valuable for numerous thermal bonding applications and for laminates. For example, a laminate of flat extruded polystyrene/PPMS foam may be directly heat-sealed to biaxially-oriented PPMS. Such materials are useful also for molding containers and in thermal insulation applications.

Known methods used to orient thermoplastic polymers are advantageously used to form the materials of this invention. For example, a film produced by extrusion through a slot orifice may be cooled to the stretching temperature and passed through two sets of pinch rolls, the second rotating faster than the first. The degree of orientation will depend upon the relative rotational speeds of the two sets of rolls and the temperature of the film. This process achieves stretching in only one direction and the strength of the film is increased solely in that direction.

Stretching in two directions may be sequential or simultaneous. One suitable method for sequential orientation is to extrude the film through a slot orifice, draw it longitudinally by a pinch-roll system, and then draw it laterally by means of pairs of clamps which are attached to the lateral edges of the film and which are arranged to move apart as the film is led forward. The film may be heated during the stretching steps by passing it over a heated roll or by means of hot inert gases or liquids or by infra-red heating.

A convenient method for orienting a film in two directions simultaneously is to extrude the molten polymer through an annular orifice to produce a tube and to draw the tube lengthwise by flattening it and passing it through two sets of nip rolls, the second rotating faster than the first. The tube is simultaneously stretched by internal gas pressure created within the tube between the two sets of nip rolls. The presence of the first set of nip rolls also prevents the point of expansion moving backwards to a position at which the tube, after extrusion, is still at a temperature at which flow would occur to the detriment of orientation. This method may be advantageous for PPMS co-extruded with other polymers, as disclosed in U.S. Patent 4,151,318.

Another method is to extrude the film from a slit orifice, cool it and grip each side of the cooled film by a number of pairs of clamps. The clamps are then drawn along a path such that those in each pair diverge laterally from each other and the distance between adjacent pairs is also increased, thus stretching the film laterally and longitudinally. The oriented films obtained by these methods have higher tensile strengths and are less brittle than unoriented films.

Films according to the present invention can be coated with thermoplastic heat-seal coatings or slip coatings or can be used in uncoated form, and they can be heat-sealed without coating making them generally useful as packaging materials. Heterofilms (in which two or more films are formed together) and laminates (in which two or more films are separately formed and subsequently laminated) may be formed with good adhesion between the layers without the need for a separate adhesive. For example, a layer of thermoplastic polymer may be extruded onto the surface of PPMS film to provide a heat-sealable surface, or the PPMS may be used as a clear, glossy and attractive surface coating for other films.

The following example illustrates the invention. In the example, all parts are by weight.

Example

An essentially homopolymeric resin is prepared from an isomeric mixture of 97% p-methylstyrene with the balance being essentially m-methylstyrene and free of the ortho isomer except in trace amounts. Polymerization is carried out under free radical polymerization conditions by suspension in water at a PMS/$H_2$O ratio of 1:1. The dispersed organic phase includes 100 parts of p-methylstyrene, 0.05 parts "Irganox® 1076" antioxidant, $0.75 \times 10^{-4}$ parts "Perox Blue 2R" dye, 0.19 parts benzoyl peroxide and 0.38 parts of "Esperox 497M" (75%). The 100 parts water are added to an agitated, nitrogen-purged reaction vessel and heated to 85°C while 1 part of tricalcium phosphate is dispersed. The dispersed phase is added to the aqueous phase slowly over a period of about 20 minutes, while stirring the reactor at 600 RPM and maintaining the temperature at about 76°C. After continuing agitation for 5 minutes a catalytic amount of potassium persulfate is added in aqueous solution to initiate the polymerization, and further addition of catalyst is made after 5 hours, after which the reaction temperature is increased uniformly from 92°C to about 120°C over 3 hours and held for 2 hours before cooling to 50—60°C.

The resin is recovered in solid bead form and dried. It has a molecular weight of about 320,000 (viscosity average in toluene at 30°C). The melt index is 1.7±0.25 g/10 minutes. The polymer is essentially linear with no evidence of cross-linking.

The PPMS is compression molded at about 150°C under 2030 kPa maximum pressure for 2.5 hours to form a flat sheet. These conditions avoid cross-linking and gel formation. The sheet is biaxially-oriented by stretching 7:1 in perpendicular directions on a standard T.M. Long orientation stretcher. The stretching temperature for both machine direction (MD) and transverse direction (TD) orientation steps is about 120°C (about 10°C above the glass transition temperature, Tg), and the stretching rates are 1000%/minute (MD) and 700%/minute (TD). The product is an oriented film 23 μm thick having properties tabulated below with comparable data for polystyrene.

| Material | Elastic modulus GPa | | Dimensional chance at 100°C | |
|---|---|---|---|---|
| | MD | TD | MD | TD |
| PPMS | 3.84 | 3.84 | −29% | −35% |
| Polystyrenes: Foster Grant 500* | 3.48 | 3.52 | −34% | −37% |
| Dow Trycite® 1000 (published data) | 3.10** | | — | — |

\* Molded at 200°C for 0.3 hours. Other conditions same as PPMS
\*\* Commercially available material

The elongation at break, tensile strength and orientation properties of the PPMS film are nearly the same as those for the oriented polystyrene, with barrier properties (water vapor and oxygen) also being nearly identical. The oriented PPMS film has excellent optical quality. Standard ASTM values for haze is 1.2% and 45° gloss is 84 to 101%.

**Claims**

1. A biaxially-oriented film of a methylstyrene polymer at least 90% of the repeating units of which are derived from p-methylstyrene.

2. A biaxially-oriented film according to claim 1, wherein the methylstyrene polymer has a glass transition temperature above 100°C.

3. A biaxially-oriented film according to claim 1 or claim 2, which exhibits at least 30% average linear shrinkage at 100°C and has an elastic modulus of at least 3.79 GPa.

4. A biaxially-oriented film according to any one of claims 1 to 3, wherein less than 5% of the repeating units are derived from m-methylstyrene and less than 0.1% of the repeating units are derived from o-methylstyrene, and which has a glass transition temperature of about 109°C.

5. A method for the manufacture of a biaxially-oriented film according to any one of claims 1 to 4, which comprises hot-stretching a sheet of a methylstyrene polymer at least 90% of the repeating units of which are derived from p-methylstyrene, at a temperature above its glass transition temperature.

6. A method according to claim 5, wherein the sheet is stretched at a temperature of from 110 to 125°C and in a linear stretch ratio of from 2:1 to 8:1.

7. A method according to claim 5 or claim 6, wherein the sheet is stretched at a temperature of about 120°C.

8. A method according to any one of claims 5 to 7, wherein the sheet is stretched sequentially in the machine and transverse directions, both in a linear stretch ratio of about 7:1.

**Patentansprüche**

1. Biaxial orientierte Folie eines Methylstyrolpolymers, bei dem mindestens 90% der sich wiederholenden Einheiten von p-Methylstyrol abgeleitet sind.

2. Biaxial orientierte Folie nach Anspruch 1, worin das Methylstyrolpolymer eine Glasübergangstemperatur oberhalb 100°C aufweist.

3. Biaxial orientierte Folie nach Anspruch 1 oder 2, die bei 100°C ein durchschnittliches Lineares Schrumpfen von mindestens 30% zeigt und einen Elastizitätzmodul von mindestens 3,79 GPa aufweist.

4. Biaxial orientierte Folie nach einem der Ansprüche 1 bis 3, welche eine Glasübergangstemperatur von etwa 109°C aufweist und worin weniger als 5% der sich wiederholenden Einheiten von m-Methylstyrol und weniger als 0,1% der sich wiederholenden Einheiten von o-Methylstyrol abgeleitet sind.

5. Verfahren zur Herstellung einer biaxial orientierten Folie nach einem der Ansprüche 1 bis 4, welches das Heißrecken eines Streifens eines Methylstyrolpolymers, bei dem mindestens 90% der sich wiederholenden Einheiten von p-Methylstyrol abgeleitet sind, bei einer Temperatur oberhalb der Glasübergangstemperatur des Polymers umfaßt.

6. Verfahren nach Anspruch 5, worin der Streifen bei einer Temperatur von 110 bis 125°C und in einem linearen Reckverhältnis von 2:1 bis 8:1 gereckt wird.

7. Verfahren nach Anspruch 5 und 6, worin der Streifen bei einer Temperatur von 120°C gereckt wird.

8. Verfahren nach einem der Ansprüche 5 bis 7, worin der Streifen aufeinanderfolgend in der Maschinen- und in der Querrichtung gereckt und in beiden Fällen ein lineares Reckverhältnis von etwa 7:1 angewandt wird.

**Revendications**

1. Un film orienté biaxialement d'un polymère de méthylstyrène dont au moins 90% des motifs récurrents sont dérivés du p-méthylstyrène.

2. Un film orienté biaxialement selon la revendication 1, dans lequel le polymère de méthylstyrène a une température de transition vitreuse supérieure à 100°C.

3. Un film orienté biaxialement selon la revendication 1 ou 2, qui présente un retrait linéaire moyen à 100°C d'au moins 30% et a un module élastique d'au moins 3,79 GPa.

4. Un film orienté biaxialement selon l'une quelconque des revendications 1 à 3, dans lequel moins de 5% des motifs récurrents sont dérivés du m-méthylstyrène et moins de 0,1% des motifs récurrents sont dérivés du o-méthylstyrène, et qui a une température de transition vitreuse d'environ 109°C.

5. Un procédé pour la fabrication d'un film orienté biaxialement selon l'une quelconque des revendications 1 à 4, qui comprend l'étirage à chaud d'une feuille d'un polymère de méthylstyrène dont au moins 90% des motifs récurrents sont dérivés du p-méthylstyrène à une température supérieure à sa température de transition vitreuse.

6. Un procédé selon la revendication 5, dans lequel la feuille est étirée à une température de 110 à 125°C et dans un rapport linéaire d'étirage de 2:1 à 8:1.

7. Un procédé selon la revendication 5 ou 6, dans lequel la feuille est étirée à une température d'environ 120°C.

8. Un procédé selon l'une quelconque des revendications 5 à 7, dans laquelle la feuille est étirée successivement dans la direction machine et dans la direction transversale, chaque fois dans un rapport linéaire d'étirage d'environ 7:1.